# EUROPÄISCHE PATENTSCHRIFT

(11) **EP 3 612 014 B1**
(45) Veröffentlichungstag und Bekanntmachung des Hinweises auf die Patenterteilung: **05.01.2022**
(21) Anmeldenummer: 18723662.5
(22) Anmeldetag: 18.04.2018
(51) Int. Cl.: A01B 19/02, A01B 23/02, A01B 61/04, A01B 35/06, A01B 35/24

(54) **BODENBEARBEITUNGSGERÄT**
SOIL WORKING DEVICE
MACHINE POUR CULTIVER LE SOL

(30) Priorität: 18.04.2017 AT 5006217 U
(43) Veröffentlichungstag der Anmeldung: 26.02.2020
(73) Patentinhaber: Schöls, Jürgen, 3753 Dallein (AT)
(72) Erfinder: Schöls, Jürgen, 3753 Dallein (AT)
(74) Vertreter: Müllner, Martin
(86) Internationale Anmeldenummer: PCT/AT2018/060074
(87) Internationale Veröffentlichungsnummer: WO 2018/191767

(56) Entgegenhaltungen:
- EP-A1- 1 961 283
- EP-A1- 2 656 708
- EP-A2- 0 983 715
- CN-B- 103 109 595
- DE-A1- 10 313 179
- FR-A1- 2 670 358

## Beschreibung

### Technisches Gebiet

Die vorliegende Erfindung betrifft ein Bodenbearbeitungsgerät, insbesondere zur Pflege der Bodenflächen von Kulturpflanzungen, mit einem Traggestell, mehreren am Traggestell verschwenkbar angeordneten Striegelzinken und einer den Striegelzinken zugeordneten Verstelleinrichtung, durch welche die Vorspannung der über Federn vorgespannten Striegelzinken zentral mittels eines Antriebs verstellbar ist, der oberhalb der Drehpunkte der Striegelzinken angeordnet ist, wobei die Striegelzinken als zweiarmige Hebel ausgebildet sind und am oberen Ende der Striegelzinken ein Federsystem angreift, deren anderes Ende mittels des Antriebs verstellbar ist, wobei die Verbindung zumindest einiger der anderen Enden der Federsysteme mit dem Antrieb über Stangen erfolgt, die alle oberhalb der Drehpunkte der Striegelzinken angeordnet sind, .

### Stand der Technik

Ein Bodenbearbeitungsgerät mit einem Traggestell, mehreren am Traggestell verschwenkbar angeordneten Striegelzinken und einer den Striegelzinken zugeordneten Verstelleinrichtung, durch welche die Vorspannung der über Federn vorgespannten Striegelzinken zentral mittels eines Antriebs verstellbar ist, der oberhalb der Drehpunkte der Striegelzinken angeordnet ist, ist aus patcit0001:EP 1961283 B --. bekannt. Die Striegelzinken sind gemäß dieser Schrift als einarmige Hebel ausgebildet. Der Antrieb, beispielsweise ein Hydraulikzylinder, ist mit Zugseilen verbunden, die über zweckmäßig angeordnete Umlenkrollen über jeweils eine Feder mit jeweils einem Striegelzinken verbunden sind. Da die Striegelzinken als einarmige Hebel ausgebildet sind, muss die Feder zwangsläufig unterhalb der Drehpunkte der Striegelzinken angreifen, und auch die Zugseile verlaufen zumindest teilweise unterhalb dieser Drehpunkte.

Da die Federn und teilweise die Seile unterhalb der Drehpunkte der Striegelzinken angeordnet sind, kommt es durch diese Teile leicht zu einer Beschädigung der Kulturpflanzen.

Ein Bodenbearbeitungsgerät der eingangs genannten Art ist aus patcit0002:EP 983715 A --. bekannt. Durch diese Konstruktion wird der oben genannte Nachteil vermieden: Da die Striegelzinken als zweiarmige Hebel ausgebildet sind, ist es möglich, die Betätigung über die Federsysteme oberhalb der Drehpunkte der Striegelzinken anzuordnen, sodass der Raum unterhalb der Drehpunkte fast vollständig frei bleiben kann.

Nachteilig ist aber dennoch auch bei dieser Lösung, dass die Striegelzinken immer mit einem gewissen Mindestdruck in den Boden gedrückt werden, welcher sich aus dem Gewicht der Federn und dem Gewicht der Striegelzinken ergibt. Bei sehr leichten Böden dringen daher die Striegelzinken oft zu tief ein, auch dann, wenn die Zugfedern entlastet sind. Es ist auch nicht möglich, die Striegelzinken anzuheben. Will man einen Bodenkontakt der Striegelzinken verhindern (was insbesondere der Fall ist, wenn das Bodenbearbeitungsgerät vom Traktor abgekoppelt und abgestellt wird, weil sich sonst die Striegelzinken verbiegen könnten) müssen die Tasträder ganz nach unten gestellt werden. Die Dokumente DE 103 13 179 A1, EP 1 961 283 A1, FR 2 670 358 A1 und CN 103 109 595 B beschreiben bekannte Bodenbearbeitungsgeräte.

### Darstellung der Erfindung

Es ist Aufgabe der vorliegenden Erfindung, diese Nachteile zu beseitigen.

Diese Aufgabe wird durch ein Bodenbearbeitungsgerät der eingangs genannten Art erfindungsgemäß dadurch gelöst, dass jedes Federsystem eine in einem Führungselement angeordnete Druckfeder aufweist, deren dem Striegelzinken zugewandtes Ende durch den Antrieb verstellbar ist und deren vom Striegelzinken abgewandtes Ende über ein Verbindungselement mit dem Striegelzinken verbunden ist.

Auf diese Weise wird durch Komprimieren der Druckfeder der Striegelzinken in den Boden gedrückt bzw. er kann Hindernissen durch weiteres Komprimieren der Druckfeder ausweichen; er kann aber infolge des Führungselements auch entlastet werden, weil dieses über das Verbindungselement den Striegelzinken auch anheben kann.

Somit kann die Kraft, mit der die Striegelzinken in den Boden gedrückt werden, nicht nur bis auf null reduziert werden, sondern die Striegelzinken können sogar in der Gegenrichtung angehoben werden. Damit können die Tasträder immer in der Arbeitsposition bleiben, auch dann, wenn das Bodenbearbeitungsgerät vom Traktor abgekoppelt und abgestellt wird.

Vorzugsweise ist das Führungselement für die Druckfeder ein Rohr, wobei das vom Striegelzinken abgewandte Ende der Druckfeder auf eine im Rohr geführte Scheibe wirkt und die Scheibe mit dem Verbindungselement verbunden ist. Durch die Ausbildung des Führungselements als Rohr ist einerseits die Druckfeder vor Verschmutzung geschützt, und auch die Verletzungsgefahr durch Einklemmen von Fingern zwischen den Windungen der Druckfeder ist eliminiert. Andererseits kann das Rohr als Führung für die Scheibe dienen, über die die Striegelzinken abgesenkt oder angehoben werden.

Weiters ergibt sich die Möglichkeit, koaxial zur Druckfeder eine weitere Druckfeder vorzusehen, sodass die Kennlinie des Federsystems entsprechend den Erfordernissen eingestellt werden kann. Wenn die weitere Druckfeder im entspannten Zustand kürzer als das Führungselement ist, werden erst nach einer gewissen Kompression der ersten Druckfeder beide Druckfern wirksam, sodass ab diesem Punkt die Kennlinie steiler ansteigt.

Nach einem weiteren bevorzugten Merkmal der Erfindung ist vorgesehen, dass die Verbindung der Federsysteme mit den Striegelzinken einen Totgang aufweist. Wenn man in einem sehr leichten Boden den Striegelzinken bereits leicht anhebt, damit er nicht durch sein Eigengewicht zu tief in den Boden eindringt, dann kann er einem Hindernis (einem Stein) infolge des Totgangs ausweichen, ohne dass das Federsystem bereits wirksam wird. Auf diese Weise ist die Kennlinie dreistufig: während des Totgangs ist keine Feder wirksam, danach die erste Druckfeder und schließlich die erste und die weitere Druckfeder.

Vorzugsweise weist das Traggestell mehrere hintereinander angeordnete Querträger auf und sind die Striegelzinken reihenweise angeordnet und auf diesen Querträgern gelagert. Dadurch ergibt sich die Möglichkeit, die anderen Enden der Federsysteme mit Hebeln zu verbinden, die auch an den Querträgern drehbar gelagert sind. Je nach Länge der Federsysteme wird man die Hebel am benachbarten oder eventuell auch am übernächsten Querträger lagern, bezogen auf den Querträger, an dem der entsprechende Striegelzinken gelagert ist. Auf diese Weise kann sich das andere Ende der Federsysteme nur entlang eines Kreisbogens bewegen, was deren Betätigung vereinfacht.

Weiters ist es zweckmäßig, wenn die Hebel jeder Reihe jeweils auf einer Welle befestigt sind, die auf einem der Querträger gelagert ist. Auf diese Weise können sich alle Hebel einer Reihe nur gemeinsam verstellen, sodass also auch die Federvorspannung auf alle Striegelzinken dieser Reihe gleich ist.

Die Übertragung der Stellbewegung des Antriebs kann derart erfolgen, dass der Antrieb auf eine Querstange wirkt, die mit Längsstangen verbunden ist, die mit zumindest einigen Hebeln jeder Reihe verbunden sind. Infolge der Welle genügt es, wenn jeder zweite Hebel jeder Reihe mit einer der Längsstangen verbunden ist; die Verstellung der dazwischenliegenden Hebel erfolgt über die Welle. Man könnte auch weniger Längsstangen vorsehen (also zum Beispiel nur jeden dritten oder jeden vierten Hebel über Längsstangen ansteuern), aber dann muss die Welle stärker dimensioniert werden.

Alternativ dazu ist es vorzuziehen, insbesondere wenn hohe Belastungen zu erwarten sind, dass durch Stangen ein durch den Antrieb verschiebbarer Rahmen gebildet wird und dass oberhalb des verschiebbaren Rahmens ein weiterer Rahmen vorgesehen ist, der über Verbindungselemente mit dem Traggestell an mehreren Punkten verbunden ist und dieses somit versteift..

Bei dieser Ausführung ist also der verschiebbare Rahmen sandwichartig zwischen dem Traggestell und dem weiteren Rahmen vorgesehen, sodass zwischen dem Traggestell und dem weiteren Rahmen ein relativ großer Abstand besteht, wodurch das Traggestell und der weitere Rahmen zusammen einen höchst stabilen Quader bilden.

Der Antrieb erfolgt vorzugsweise mittels eines Hydraulikzylinders. Er kann aber auch mittels eines Linearmotors erfolgen, oder mittels einer Verstellspindel, die mittels eines Elektromotors angetrieben sein kann, oder mittels eines Pneumatikzylinders.

### Kurze Beschreibung der Zeichnungen

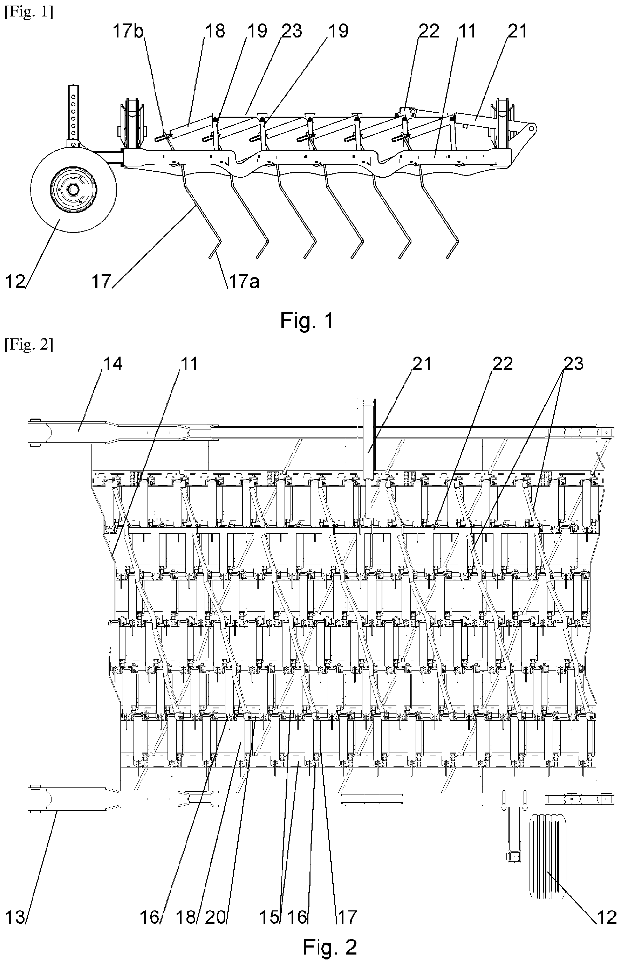

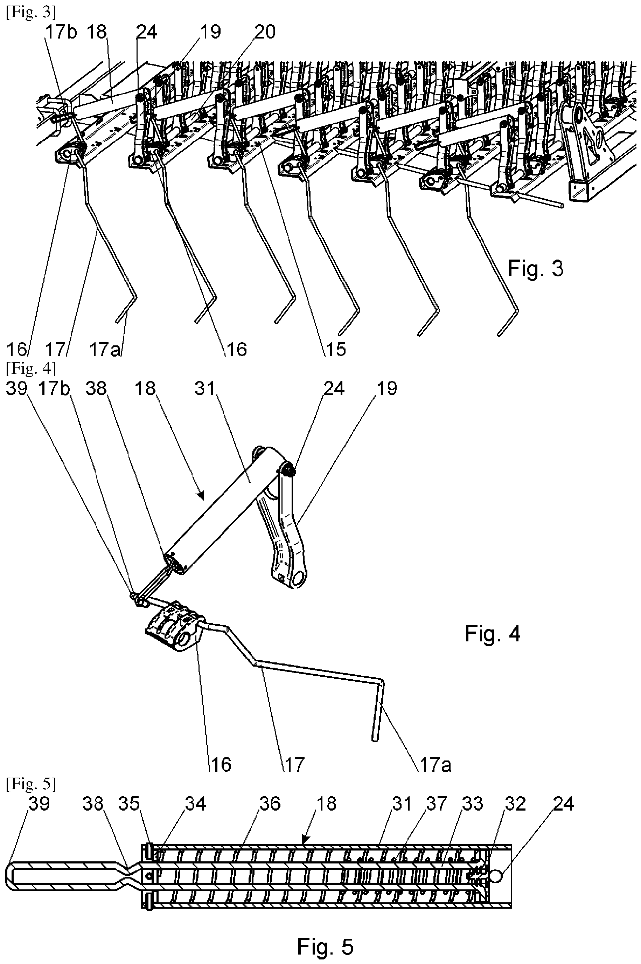

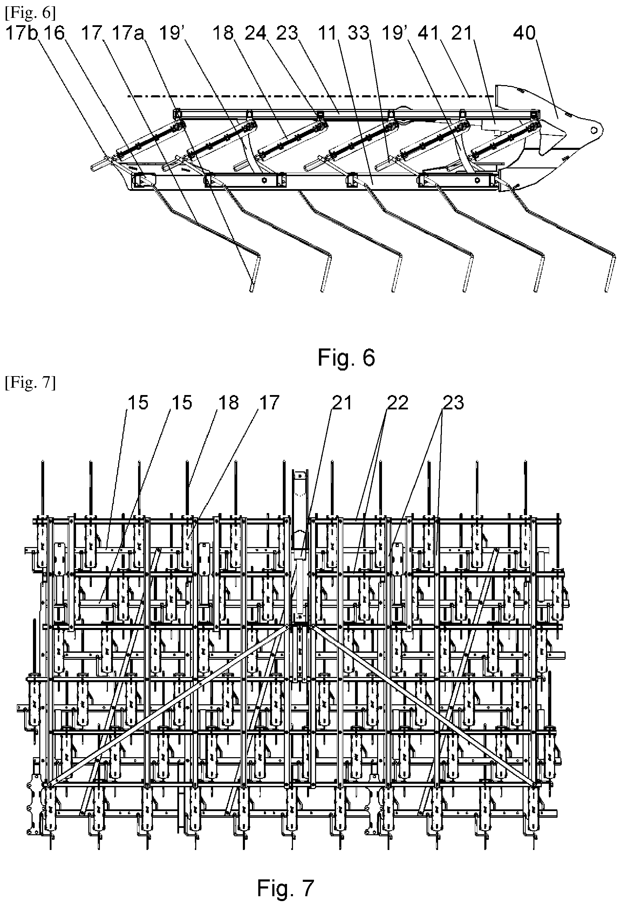

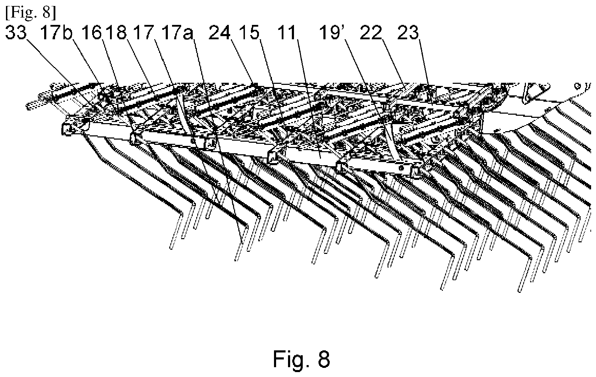

An Hand der beiliegenden Zeichnungen wird die vorliegende Erfindung näher erläutert. Fig. 1 und 2 zeigen jeweils die linke Hälfte einer ersten Ausführungsform eines erfindungsgemäßen Bodenbearbeitungsgeräts, Fig. 1 von rechts gesehen (bezogen auf die Fahrtrichtung) und Fig. 2 von oben gesehen; Fig. 3 zeigt einen Ausschnitt einiger Querträger des Bodenbearbeitungsgeräts gemäß Fig. 1 und 2; Fig. 4 zeigt einen Striegelzinken mit Betätigungsvorrichtung; Fig. 5 zeigt das Federsystem der Betätigungsvorrichtung im Schnitt; und die Fig. 6 bis 8 zeigen eine zweite Ausführungsform eines erfindungsgemäßen Bodenbearbeitungsgeräts, analog zu den Fig. 1 bis 3.

### Weg(e) zur Ausführung der Erfindung

Fig. 1 und 2 zeigen die linke Hälfte eines erfindungsgemäßen Bodenbearbeitungsgeräts, wobei die rechte Hälfte dazu spiegelsymmetrisch ausgebildet ist. Die Fahrtrichtung ist bei der Darstellung gemäß Fig. 1 nach links, bei der Darstellung gemäß Fig. 2 nach unten. Die dargestellte Hälfte des Bodenbearbeitungsgeräts weist ein Traggestell 11 auf, das in Fahrtrichtung vorne in üblicher Weise ein höhenverstellbares Tastrad 12 aufweist. Weiters sind Verbindungselemente 13, 14 vorgesehen, die zur Verbindung der linken und der rechten Hälfte des Bodenbearbeitungsgeräts dienen. Das Traggestell 11 weist mehrere parallel zueinander angeordnete Querträger 15 (siehe auch Fig. 3) auf, auf denen Lager 16 für Striegelzinken 17 angebracht sind. Die Striegelzinken 17 sind als zweiarmige Hebel ausgebildet; das untere Ende 17a bearbeitet den Boden, das obere Ende 17b ist mit einem Ende eines Federsystems 18 verbunden. Das andere Ende dieses Federsystems 18 ist mit dem freien Ende eines Hebels 19 verbunden, welcher auf einer Welle 20 fixiert ist, die in den Lagern 16 des benachbarten Querträgers 15 gelagert ist.

Zur Verstellung ist ein Hydraulikzylinder 21 (siehe Fig. 1 und 2) vorgesehen, der auf eine Querstange 22 wirkt. Diese Querstange 22 ist mit Längsstangen 23 verbunden, wobei jede dieser Längsstangen 23 mit dem freien Ende bestimmter Hebel 19 (siehe Fig. 1) verbunden ist. Wie aus Fig. 2 ersichtlich, sind - verglichen mit der Anzahl an Striegelzinken 17 auf jedem Querträger 15 - nur rund halb so viele Längsstangen 23 vorgesehen. Da die Hebel 19 (siehe Fig. 3) drehfest auf der Welle 20 befestigt sind, führen dennoch sämtliche Hebel 19 und damit sämtliche Federsysteme 18 dieselbe Stellbewegung aus, wenn der Hydraulikzylinder 21 (siehe Fig. 1 und 2) betätigt wird.

Anhand der Fig. 4 und 5 wird nun die Verstellung mittels des Federsystems 18 genauer erläutert. In einem Rohr 31 ist eine Lochscheibe 32 verschiebbar angeordnet. Diese Lochscheibe 32 weist Ausnehmungen auf, in welche die abgewinkelten Enden eines Verbindungselements 33, das im Wesentlichen ein U-förmiger Drahtbügel ist, eingreifen. Die Lochscheibe 32 kann sich maximal bis zu einem Bolzen 24, welcher den Hebel 19 mit dem Rohr 31 verbindet, nach rechts bewegen. Am gegenüberliegenden Ende des Rohrs 31 befindet sich eine Scheibe 34, die durch Bolzen 35 gegen eine Bewegung nach links fixiert ist. Zwischen den beiden Scheiben 32 und 34 befinden sich eine äußere Druckfeder 36 und eine kürzere, innere Druckfeder 37.

Zieht man das Rohr 31 mittels des Bolzens 24 (also im Endeffekt mittels des Hebels 19) gegen den Widerstand des Verbindungselements 33 nach rechts, verschiebt sich die Lochscheibe 32 gegen die Kraft der äußeren Druckfeder 36 nach links (bezogen auf das Rohr 31). Nach ungefähr dem halben Verstellweg kommt dann auch die innere Druckfeder 37 zu Wirkung, sodass dann die rücktreibende Kraft stark ansteigt. Dies ist wichtig, damit man unterschiedlich schwere Böden bearbeiten kann: in schweren Böden verstellt man die Hebel 19 so weit, dass beide Druckfedern 36, 37 wirken, in leichteren Böden jedoch nur so weit, dass ausschließlich die äußere Druckfeder 36 wirkt.

Wie man aus den Zeichnungen sieht, weist das Verbindungselement 33 eine Stelle 38 auf, wo der Abstand zwischen den beiden Schenkeln verringert ist. Verschiebt man das Rohr 31 ausreichend weit nach links, so kommt das obere Ende 17b (siehe Fig. 4) des Striegelzinkens 17 an dieser Stelle 38 zum Anliegen, und bei weiterer Verstellung wird der Striegelzinken 17 angehoben. Wenn man die Striegelzinken 17 maximal anhebt, kann man das erfindungsgemäße Bodenbearbeitungsgerät ohne Verstellung der Tasträder 12 (siehe Fig. 1 und 2) abstellen, ohne dass die Gefahr besteht, dass die Striegelzinken 17 am Boden aufstehen und sich verbiegen.

Zwischen dieser Stelle 38 (siehe Fig. 4 und 5) und dem Ende 39 kann sich das obere Ende 17b der Striegelzinken 17 frei bewegen, sodass sich ein Totgang ergibt. Es ist dadurch möglich, in extrem leichten Böden (wo bereits das Eigengewicht der Striegelzinken 17 ein zu tiefes Eindringen in den Boden bewirken würde) die Striegelzinken 17 geringfügig anzuheben; wenn in dieser Situation ein Widerstand (zum Beispiel infolge eines Steins) auftritt, kann der Striegelzinken 17 um den Totgang ausschwenken, ohne dass die Druckfeder 36 oder gar die Druckfeder 37 zur Wirkung kommt.

Die Ausführungsform gemäß den Fig. 5 bis 8 ist der eben beschriebenen Ausführungsform relativ ähnlich, gleiche Teile tragen daher gleiche Bezugszeichen. Es gibt jedoch keine Wellen 20, auf denen Hebel 19 zum Anlenken der Federsysteme 18 angebracht sind, sondern es sind Hebel 19' vorgesehen, die einen beweglichen Rahmen bestehend aus Querstangen 22 und Längsstangen 23 verschiebbar, genauer gesagt verschwenkbar, lagern. Dieser bewegliche Rahmen wird durch den Hydraulikzylinder 21 verschoben. Die Federsysteme 18 sind mit den Bolzen 24 an diesem beweglichen Rahmen angelenkt. Auf diese Weise können höhere Kräfte übertragen werden. Ein weiterer Unterschied zu dem Ausführungsbeispiel gemäß den Fig. 1 bis 3 ist nur angedeutet: mit dem Traggestell 11 ist ein Verbindungselement 40 verbunden, mit dessen oberem Ende ein weiterer (unbeweglicher) Rahmen (nicht dargestellt, in Fig. 5 durch eine strichpunktierte Linie 41 angedeutet) verbunden ist. Es gibt natürlich mehrere solcher Verbindungselemente, sodass der weitere Rahmen (der wie üblich Längsträger, Querträger und diagonale Versteifungselemente aufweisen kann) zusammen mit dem Traggestell 11 ein hochfestes, verwindungssteifes, quaderförmiges Element bildet, in dessen Innerem sich der bewegliche Rahmen befindet.

## Patentansprüche

1. Bodenbearbeitungsgerät, insbesondere zur Pflege der Bodenflächen von Kulturpflanzungen, mit einem Traggestell (11), mehreren am Traggestell (11) verschwenkbar angeordneten Striegelzinken (17) und einer den Striegelzinken (17) zugeordneten Verstelleinrichtung, durch welche die Vorspannung der über Federn (36, 37) vorgespannten Striegelzinken (17) zentral mittels eines Antriebs verstellbar ist, der oberhalb der Drehpunkte der Striegelzinken (17) angeordnet ist, wobei die Striegelzinken (17) als zweiarmige Hebel ausgebildet sind und am oberen Ende (17b) der Striegelzinken (17) ein Federsystem (18) angreift, deren anderes Ende mittels des Antriebs verstellbar ist, wobei die Verbindung zumindest einiger der anderen Enden der Federsysteme (18) mit dem Antrieb über Stangen (22, 23) erfolgt, die alle oberhalb der Drehpunkte der Striegelzinken (17) angeordnet sind, **dadurch gekennzeichnet, dass** jedes Federsystem (18) eine in einem Führungselement (31) angeordnete Druckfeder (36) aufweist, deren dem Striegelzinken (17) zugewandtes Ende durch den Antrieb verstellbar ist und deren vom Striegelzinken (17) abgewandtes Ende über ein Verbindungselement (33) mit dem Striegelzinken verbunden ist.

2. Bodenbearbeitungsgerät nach Anspruch 1, **dadurch gekennzeichnet, dass** das Führungselement (31) ein Rohr ist und dass das vom Striegelzinken (17) abgewandte Ende der Druckfeder (36) auf eine im Rohr geführte Scheibe (32) wirkt und dass die Scheibe (32) mit dem Verbindungselement (33) verbunden ist.

3. Bodenbearbeitungsgerät nach Anspruch 1 oder 2, **dadurch gekennzeichnet, dass** koaxial zur Druckfeder (36) eine weitere Druckfeder (37) vorgesehen ist.

4. Bodenbearbeitungsgerät nach Anspruch 3, **dadurch gekennzeichnet, dass** die weitere Druckfeder im entspannten Zustand kürzer als das Führungselement (31) ist.

5. Bodenbearbeitungsgerät nach einem der Ansprüche 1 bis 4, **dadurch gekennzeichnet, dass** die Verbindung der Federsysteme (18) mit den Striegelzinken (17) einen Totgang aufweist.

6. Bodenbearbeitungsgerät nach einem der Ansprüche 1 bis 5, **dadurch gekennzeichnet, dass** das Traggestell (11) mehrere hintereinander angeordnete Querträger (15) aufweist und dass die Striegelzinken (17) reihenweise angeordnet und auf diesen Querträgern (15) gelagert sind.

7. Bodenbearbeitungsgerät nach Anspruch 6, **dadurch gekennzeichnet, dass** die anderen Enden der Federsysteme (18) mit Hebeln (19) verbunden sind, die an den Querträgern (15) drehbar gelagert sind.

8. Bodenbearbeitungsgerät nach Anspruch 7, **dadurch gekennzeichnet, dass** die Hebel (19) jeder Reihe jeweils auf einer Welle (20) befestigt sind, die auf einem der Querträger (15) gelagert ist.

9. Bodenbearbeitungsgerät nach Anspruch 8, **dadurch gekennzeichnet, dass** der Antrieb auf eine Querstange (22) wirkt, die mit Längsstangen (23) verbunden ist, die mit zumindest einigen Hebeln (19) jeder Reihe verbunden sind.

10. Bodenbearbeitungsgerät nach Anspruch 9, **dadurch gekennzeichnet, dass** jeder zweite Hebel (19) jeder Reihe mit einer der Längsstangen (23) verbunden ist.

11. Bodenbearbeitungsgerät nach Anspruch 6, **dadurch gekennzeichnet, dass** durch Stangen (22, 23) ein durch den Antrieb verschiebbarer Rahmen gebildet wird und dass oberhalb des verschiebbaren Rahmens ein weiterer Rahmen (41) vorgesehen ist, der über Verbindungselemente (40) mit dem Traggestell (11) an mehreren Punkten verbunden ist und dieses somit versteift.

12. Bodenbearbeitungsgerät nach einem der Ansprüche 1 bis 11, **dadurch gekennzeichnet, dass** der Antrieb mittels eines Hydraulikzylinders (21) erfolgt.

## Claims

1. A soil cultivation device, in particular for caring of the ground surfaces of cultivated crops, with a supporting structure (11), a plurality of harrow tines (17) pivotally arranged on the supporting structure (11), and an adjustment means associated to the harrow tines (17) by which the pretension of the harrow tines (17) preloaded over springs (36, 37) is centrally adjustable by means of a drive that is arranged above the pivot points of the harrow tines (17), wherein the harrow tines (17) are formed as two-armed levers, and at the upper end (17b) of the harrow tines (17) a spring system (18) is engaging, the other end of which is adjustable by means of the drive, wherein the connection of at least a few of the other ends of the spring systems (18) to the drive is accomplished by way of bars (22, 23), all of which are arranged above the pivot points of the harrow tines (17), **characterized in that** each spring system (18) includes a compression spring (36) arranged in a guide member (31), the end of which facing the harrow tines (17) is adjustable by the drive, and the end of which facing away from the harrow tines (17) is connected to the harrow tine via a connecting member (33).

2. The soil cultivation device according to claim 1, **characterized in that** the guide member (31) is a pipe and **in that** the end of the compression spring (36) facing away from the harrow tine (17) acts on a disc (32) guided in the pipe, and **in that** the disc (32) is connected to the connecting member (33).

3. The soil cultivation device according to Claim 1 or 2, **characterized in that** another compression spring (37) is provided coaxially to the compression spring (36).

4. The soil cultivation device according to Claim 3, **characterized in that** the other compression spring in the relieved state is shorter than the guide member (31).

5. The soil cultivation device according to any of Claims 1 to 4, **characterized in that** the connection of the spring systems (18) to the harrow tines (17) includes a lost motion.

6. The soil cultivation device according to any of Claims 1 to 5, **characterized in that** the supporting structure (11) includes a plurality of cross members (15) arranged one behind the other, and **in that** the harrow tines (17) are arranged in rows and are supported on these cross members (15).

7. Soil cultivation device according to claim 6, **characterized in that** the other ends of the spring systems (18) are connected to levers (19) which are rotatably supported on the cross members (15).

8. Soil cultivation device according to Claim 7, **characterized in that** the levers (19) of each row are respectively attached on a shaft (20) that is supported on one of the cross members (15).

9. Soil cultivation device according to claim 8, **characterized in that** the drive acts on a crossbar (22) that is connected to longitudinal bars (23) which are connected to at least some levers (19) of each row.

10. Soil cultivation device according to claim 9, **characterized in that** each second lever (19) of each row is connected to one of the longitudinal bars (23).

11. Soil cultivation device according to Claim 6, **characterized in that** a frame displaceable by the drive is formed by bars (22, 23), and **in that** above the displaceable frame another frame (41) is provided which is connected to the supporting structure (11) over connecting members (40) at a plurality of points and thus is stiffening this one.

12. Soil cultivation device according to any of Claims 1 to 11, **characterized in that** the drive is carried out by means of a hydraulic cylinder (21).

## Revendications

1. Instrument aratoire qui est destiné notamment à travailler la terre de surfaces cultivées et qui comporte un châssis (11), plusieurs dents de herse (17) lesquelles sont montées pivotables sur le châssis (11), et un dispositif de réglage lequel est associé aux dents de herse (17) et permet de régler, d'une manière centralisée au moyen d'un organe d'entraînement disposé au-dessus des pivots des dents de herse (17), la précontrainte à laquelle les dents de herse (17) sont soumises par l'intermédiaire de ressorts (36, 37), les dents de herse (17) étant réalisées sous forme de leviers à deux branches, un système à ressort (18) étant en prise avec l'extrémité supérieure (17b) des dents de herse (17), leur autre extrémité pouvant être réglée au moyen dudit organe d'entraînement, la liaison entre au moins certaines desdites autres extrémités des systèmes à ressort (18) et ledit organe d'entraînement étant établie par l'intermédiaire de tiges (22, 23) qui sont toutes disposées au-dessus des pivots des dents de herse (17), **caractérisé en ce que** chacun des systèmes à ressort (18) comporte un ressort de compression (36) qui est disposé dans un élément de guidage (31) et dont l'extrémité tournée vers la dent de herse (17) peut être réglée au moyen dudit organe d'entraînement, son extrémité située à l'opposé de la dent de herse (17) étant reliée à ladite dent de herse par l'intermédiaire d'un élément de liaison (33).

2. Instrument aratoire selon la revendication 1, **caractérisé en ce que** l'élément de guidage (31) est un tube, et que l'extrémité du ressort à compression (36) qui est située à l'opposé de la dent de herse (17) agit sur un disque (32) guidé au sein dudit tube, et que le disque (32) est relié à l'élément de liaison (33).

3. Instrument aratoire selon les revendications 1 ou 2, **caractérisé en ce qu'**un autre ressort de compression (37) est prévu coaxialement au ressort de compression (36) .

4. Instrument aratoire selon la revendication 3, **caractérisé en ce que,** dans son état détendu, ledit autre ressort de compression est plus court que l'élément de guidage (31).

5. Instrument aratoire selon l'une des revendications 1 à 4, **caractérisé en ce que** la liaison entre les systèmes à ressort (18) et les dents de herse (17) a du jeu.

6. Instrument aratoire selon l'une des revendications 1 à 5, **caractérisé en ce que** le châssis (11) comporte plusieurs supports transversaux (15) disposés les uns derrière les autres et que les dents de herse (17) sont disposées en rangées et montées sur ces supports transversaux (15).

7. Instrument aratoire selon la revendication 6, **caractérisé en ce que** lesdites autres extrémités des systèmes à ressort (18) sont reliées à des leviers (19) qui sont montés rotatifs sur les supports transversaux (15).

8. Instrument aratoire selon la revendication 7, **caractérisé en ce que** les leviers (19) de chaque rangée sont fixés chacun sur un arbre (20) qui est monté sur l'un des supports transversaux (15).

9. Instrument aratoire selon la revendication 8, **caractérisé en ce que** l'organe d'entraînement agit sur une tige transversale (22) qui est reliée à des tiges longitudinales (23) lesquelles sont reliées à au moins certains leviers (19) de chaque rangée.

10. Instrument aratoire selon la revendication 9, **caractérisé en ce que,** sur chacune des rangées, un levier (19) sur deux est relié à l'une des tiges longitudinales (23).

11. Instrument aratoire selon la revendication 6, **caractérisé en ce que** les tiges (22, 23) forment un cadre qui peut être déplacé au moyen dudit organe d'entraînement, et qu'au-dessus dudit cadre pouvant être déplacé, un autre cadre (41) est prévu lequel est relié, par l'intermédiaire d'éléments de liaison (40), à plusieurs endroits au châssis (11), permettant ainsi de rigidifier ce dernier.

12. Instrument aratoire selon l'une des revendications 1 à 11, **caractérisé en ce que** l'entraînement est effectué au moyen d'un cylindre hydraulique (21).
